# EUROPEAN PATENT SPECIFICATION

(11) **EP 2 824 435 B1**
(45) Date of publication and mention of the grant of the patent: **01.06.2016**
(21) Application number: 13176199.1
(22) Date of filing: 11.07.2013
(51) Int. Cl.: G01J 3/42

(54) **Terahertz frequency sensing**
Terahertz-Frequenz-Messung
Détection de fréquence térahertz

(43) Date of publication of application: 14.01.2015
(73) Proprietor: FOM Institute for Atomic and Molecular Physics, 1098 XG Amsterdam (NL)
(72) Inventor: Rivas, Jaime Gomez, 1098 XG Amsterdam (NL); Tyagi, Hemant Kumar, 1098 XG Amsterdam (NL); Georgiou, Giorgos, 1098 XG Amsterdam (NL)
(74) Representative: Visscher, Erik Henk

(56) References cited:
- US-A1- 2012 074 323
- SCHAAFSMA M C ET AL: "Paper;Enhanced terahertz extinction of single plasmonic antennas with conically tapered waveguides;Enhanced terahertz extinction of single plasmonic antennas with conically tapered waveguides", NEW JOURNAL OF PHYSICS, INSTITUTE OF PHYSICS PUBLISHING, BRISTOL, GB, vol. 15, no. 1, 18 January 2013 (2013-01-18), page 15006, XP020236871, ISSN: 1367-2630, DOI: 10.1088/1367-2630/15/1/015006
- Giorgos Georgiou ET AL: "The spectroscopy of semiconducting plasmonic resonators", , 3 September 2013 (2013-09-03), XP055088230, Retrieved from the Internet: URL:http://www.ece.umd.edu/~antonsen/Data/ IRMMW-THz 2013/Extended Abstracts/2013-09-03-Tu/TU7-1.pdf [retrieved on 2013-11-14]

## Description

### Field of the invention

The invention relates to terahertz (THz) frequency sensing, and, in particular, though not exclusively, to sensor system and a method for sensing the THz response of a small volume sample and to a computer program product using such method.

### Background of the invention

THz frequency time-domain spectroscopy (THz-TDS) is a well-known sensing technique that allows the study of THz response of samples by exposing a sample to THz pulses. The THz electromagnetic radiation has the property to couple to various low-energy modes of matter, including rotational and vibrational modes of molecules. This ability renders THz-TDS a promising technique with many applications including material analysis, air and food quality control, non-invasive screening of biological matters (e.g. cancer cells), label free bio-molecular analysis, rapid screening in drug development and detection of explosives.

One of the challenges in THz sensing is the analysis of small volume samples (i.e. sample material having a volume that is smaller than λ³ where λ is the THz wavelength) such as thin layer samples. The THz response of small volume samples is weak and hard to detect hence techniques are used in order measure such small responses with high sensitivity. For example, the THz response signal of small volume samples may be enhanced using structured conductor structures that support so-called localized surface plasmon polaritons (LSPPs). LSPPs are surface electromagnetic waves resulting from the coherent oscillations of free charge-carriers at the interface between a conductor and a dielectric that are driven by an external THz electromagnetic field.

An array (random or periodic) of such THz plasmonic resonators (plasmonic antennas) may be used to improve the THz sensitivity of a THz sensing system such as a THz-TDS system to a thin film material. For example, Berrier et al. describe in their article "Detection of deep-subwavelength dielectric layers at terahertz frequencies using semiconductor plasmonic resonantors" a scheme wherein microfabricated bowtie antennas made of doped silicon provides large field confinement and enhancement at THz frequencies in the region of its gap. Hence, when depositing a small volume sample on top of a bowtie antenna, the area around the gap of the antenna provides an enhanced THz field that results in an enhanced interaction of the THz radiation with the small volume sample. This way plasmonic antennas may substantially increase the sensitivity of a THz sensing system.

Although microfabricated plasmonic antennas allow improved THz response of small volume samples, these structures have the disadvantage that they need to be fabricated in advance. Once fabricated the antenna parameters are more or less fixed so that the sensitivity of an antenna cannot be adapted and/or optimized during calibration and/or measurements. Further, the resonant frequency of an antenna depends on its geometry and dimensions and the signal strength of the THz response depends on the amount of antennas used. Hence, in order to study the THz response of a sample over a wide THz range, multiple sets of antennas (antenna arrays) with different resonant frequencies need to be fabricated on a substrate in order to obtain sufficient responses over multiple small volume samples over a sufficient number of different resonant frequencies. Although such measurement scheme would provide responses at different points in the THz spectrum, it does not allow measuring the THz response of a small volume samples over a broad continuous range of THz frequencies as would be for example desired for obtaining THz "fingerprints" of different materials.

In order to achieve THz sensing schemes with even higher sensitivities, integrated plasmonic THz plasmonic sensing devices such as a THz plasmonic interferometer (e.g. a Mach-Zender or Young interferometers) and/or integrated THz micro-cavities are required wherein the SPPs are guided to a small volume sample on a substrate. These devices rely on propagating SPPs on extended conducting surfaces. The realization of such integrated THz plasmonic sensing devices requires microfabrication techniques such as optical lithography as described in the article by Berrier et al. Optics Express 18, 23226-23235 (2010). US2012/0074323 discloses a THz frequency range antenna comprising a semiconductor film having a surface adapted to exhibit surface plasmons in the THz frequency range.

Hence, there is a need in the art for method, devices and systems that allow improved THz sensing without the need of (complex) microfabrication. Furthermore, there is a need in the art for methods, devices and systems for THZ sensing that allow improved control of the structural parameters and/or THz sensitivity.

### Summary of the invention

It is an objective of the invention to reduce or eliminate at least one of the drawbacks known in the prior art. In a first aspect the invention relates to a sensor system according to claim 1.

The invention provides a new degree of freedom in the active control of THz localized and propagating surface plasmon polaritons. This control may be realized by the structured optical pumping of a thin-film semiconductor layer with a pattern defining resonant and/or waveguide structures for THz (localized) SSP that may be used to probe small volume samples that are located in the vicinity of part of the photo-induced plasmonic region so that the dielectric presence of the sample influences the SSP.

Undoped semiconductors, such as Si or GaAs, have a dielectric behaviour at THz frequencies. By optical excitation of electrons from the valence to the conduction band of the semiconductor, it is possible to switch its behaviour to metallic thereby enabling the excitation of THz SPPs in the semiconductor layer. The spatial profile of the pump beam may be realized by intensity wave front modulation of the pump beam with a spatial light modulator or with an optical mask.

In an embodiment, said sensing region may be shaped to comprise a local enhanced THz field. The local enhanced THz may substantially increase the THz sensitivity of the sensor system.

In an embodiment, said optical system may further comprise an optical source controller for controlling the intensity (fluence) of the geometrically shaped light beam. In another embodiment, the free carrier density in said plasmonic sensing region may be controlled by controlling the intensity (fluence) of the geometrically shaped light beam. This way structured pumping of the semiconductor surface allows the definition of new plasmonic structures by simply changing the illumination pattern, thus avoiding tedious and expensive fabrication steps.

In an embodiment, said system may further comprise an emitter for exposing at least part of said THz plasmonic sensing region to THz radiation; and a detector for detecting the THz response of said plasmonic sensing region. After the detection of a response, the illumination pattern and/or the illumination intensity may be changed and the THz response of the new configuration may be measured. This way, THz spectroscopy by (continuously) changing the resonant and/or optical and/or electronic properties of the plasmonic sensing region is possible.

In an embodiment, at least part of said photo-induced THz plasmonic sensing region may be configured as a THz plasmonic resonating region. In an embodiment, the shape of said plasmonic resonating region being configured to generate a local enhanced field.

An application of the invention may be the realization of photo-induced THz antennas with high local field enhancements in predetermined positions in the surface of a semiconductor. The resonant frequency of the antennas and the local field enhancement may be varied by simply changing the illumination pattern in the SLM or the illumination mask. If the semiconductor is functionalized with a substance (e.g. a small volume sample) that needs to be analyzed, this approach can be used to perform sensitive and broadband THz spectroscopy.

In an embodiment, said THz plasmonic resonating region may be configured as at least two resonantly coupled plasmonic regions separated by a spacing. In an embodiment, said two resonantly coupled plasmonic regions may be configured as a bow-tie antenna or a dimer antenna. In an embodiment, the resonant frequency or the local field enhancement associated with said resonant plasmonic region may be controlled by changing the geometrical shape of said light beam or the intensity (fluence) of said light beam respectively. Hence, the invention allows control of the spatial position of hot spots with large local field enhancements on the semiconductor surface by illuminating the semiconductor with a pattern having the shape of plasmonic antennas and to modify these field enhancements by changing the illumination pattern and/or intensity locally.

In an embodiment said thin-film semiconductor may be confined between a first cladding layer and second cladding layer, wherein said photo-induced THz plasmonic region may form part of a THz plasmonic waveguide. In an embodiment at least part of said plasmonic sensing region may be configured as a THz plasmonic waveguide. In another embodiment, at least part of said plasmonic waveguide may be configured to guide THz surface plasmon polaritons to said plasmonic sensing region.

Hence, beside the generation of photo-excited THz plasmonic resonant structures, the optical pumping of the thin semiconductor layer using a structured light beam in the shape of a waveguide pattern allows the realization of THz plasmonic waveguides embedded in the otherwise undoped semiconductor.

In an embodiment, said plasmonic waveguide may be part of an interferometer or a (ring) resonator wherein the optical path length between the two arms of the interferometer and the resonance frequency of said (ring) resonator respectively may be controlled by changing the geometrical shape of said light beam.

In an embodiment, the propagation length and/or the field confinement of surface plasmon polaritions in said plasmonic waveguide may be controlled by controlling the intensity (fluence) of said light beam. In another embodiment, at least part of said plasmonic waveguide may be curved wherein bending losses associated with said curved part of said waveguide may be controlled by controlling (lowering) intensity (fluence) of said light beam in said bend parts relative to the other parts of said waveguide.

Hence, a further application of the invention may be the generation of photo-induced THz plasmonic circuits such as a (Mach-Zender) interferometer, which can be used for interferometry. The optical path length between the two arms of the interferometer may be varied by changing the illumination pattern that is controlled by the SLM. By providing a small volume sample close to one of the arms of the interferometer, the response of the small volume sample may be detected.

Control of the pump intensity and of the pattern in selected positions of the waveguides enables the realization of THz plasmonic elements (e.g., in- and out-couplers, beam splitters, mirrors, modulators, etc.) and THz plasmonic (integrated) circuits such as Mach-Zender interferometers or ring resonators.

In an embodiment said thin-film semiconductor layer may comprise a type IV semiconductor, preferably Si, Ge, SiC, and compounds thereof; or a type III-V semiconductor, preferably GaAs, InSb, InAs, InP, GaSb, and compounds thereof; or a type II-VI semiconductor, preferably ZnSe, CdSe, CdTe, and compounds thereof.

In another aspect, the invention relates to a method for detecting the THz response of a small volume sample disposed on or over a semiconductor layer according to claim 14.

The invention is further related to a computer program product comprising software code portions configured for, when run in the memory of a computer, executing the method steps as described above. The invention will be further illustrated with reference to the attached drawings, which schematically will show embodiments according to the invention. It will be understood that the invention is not in any way restricted to these specific embodiments.

### Brief description of the drawings

**Fig. 1** depicts at least part of a THz sensing device according to an embodiment of the invention.
**Fig. 2** depicts a schematic of a THz sensing system according to an embodiment of the invention.
**Fig. 3** depicts an image of a photo-induced THz plasmonic resonator according to an embodiment of the invention.
**Fig. 4A** and **4B** depict extinction spectra and measured resonant frequencies for lengths of the plasmonic resonator.
**Fig. 5** depicts the calculated local field enhancement in a photo-generated plasmonic THz resonator according to an embodiment of the invention.
**Fig. 6** depicts a schematic of a THz sensing system according to an embodiment of the invention.
**Fig. 7A** and **7B** depict calculated cross-sections of photo-induced THz waveguides for different carrier densities.
**Fig. 8** depicts the propagation length and the decay length in a THz photo-induced wavelength as a function of the free carrier density N and the optical pump fluence.
**Fig. 9** schematically depicts a method of measuring the THz response of a small volume sample according to an embodiment of the invention.

### Detailed description

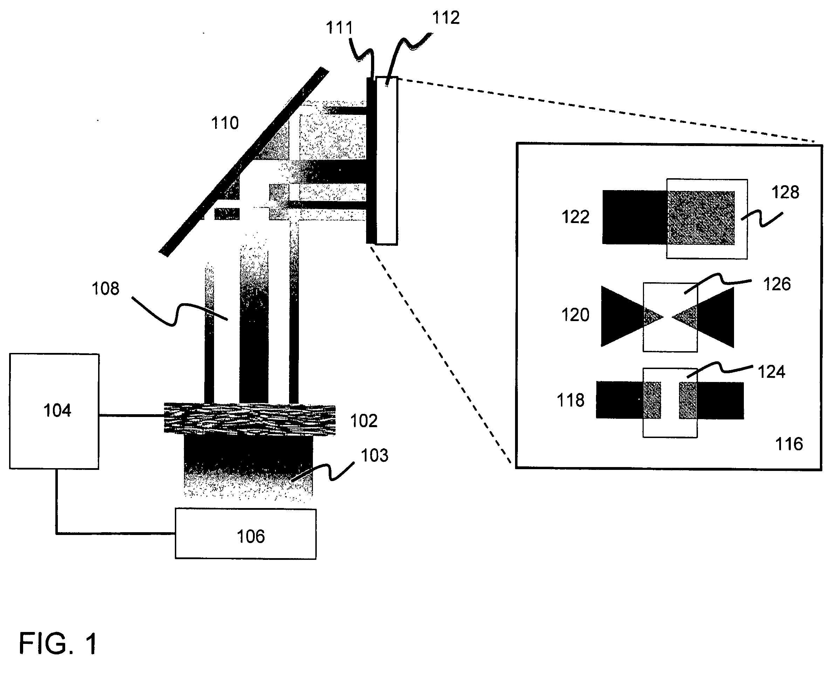

**Fig. 1** depicts at least part of a THz sensing device according to an embodiment of the invention. In particular, **Fig. 1** depicts a spatial light modulator (SLM) that is controlled by a computer **104** and that is configured to generate one or more photo-induced plasmonic structures **118-122** in thin-film semiconductor layer **111** on a support substrate **112.** A plasmonic structure may be generated in a part of the thin-film semiconductor layer by exposing the surface of the thin-film semiconductor with a structured laser beam **108.**

The structured laser beam may be generated by exposing the computer-controlled spatial light modulator (SLM) with laser light **103** that originates from a laser source **106.** The (pulsed) laser light that is configured to expose the SLM may be referred to as an optical pump. Various types of SLMs may be used to expose the top surface of the thin-film semiconductor with structured light beam. In one embodiment, the SLM may be a pixelated LCD (e.g. 1920 × 1200 pixels), which is configured to continuously change the light intensity that originates from a pixel from a maximum value (bright pixel) to a minim value (dark pixel). LCD SLMs provide the advantage that they are cheap.

In another embodiment, the SLM may be based on MEMS technology comprising an array of deformable mirrors. In such MEMS-based SLM each pixel comprises a piezoelectric-controlled mirror. When applying a voltage to the piezoelectric, the mirror moved over a desired amount thereby allowing to continuously change the light intensity that originates from a pixel from a maximum value (bright pixel) to a minim value (dark pixel).

Hence, the SLM is coupled to a computer that comprises a SLM controller which controls the light transmissive properties of the pixels. When exposing the SLM with laser, a geometrically structured laser beam may be imaged by a lens system (not shown) and/or a (semitransparent) mirror **110** onto the thin-film semiconducting layer. The optical system may be configured such that the geometrically structured laser beam projected substantially normal to the surface of the semiconductor.

In an alternative embodiment, instead of a computer-controlled SLM a fixed optical mask may be used. This mask may produce a fix illumination pattern on the sample.

A lens with a predetermined focal length (e.g. 150 mm) may be used to project the structured beam onto the surface of the semiconductor thin-film. The pixel size on the surface of the sample (e.g. 8×8 µm²), may be substantial smaller than the wavelength of THz radiation so that sub-wavelength THz plasmonic structures may be realized. In the illuminated areas electrons are photo-excited from the valence to the conduction band so that these regions obtain a metallic character.

The thin film semiconductor layer may comprise a crystalline undoped semiconductor. In an embodiment, the layer may be (part of) a semiconductor wafer having a relatively large thickness thickness (thicker than 50 micron). In another embodiment, the semiconducting layer may be a thin-film semiconductor have a thickness between 50 nm and 50 micron. In another embodiment, the thickness may be selected between 100 nm and 25 micron or between 200 nm and 10 micron. In an embodiment, the semiconductor layer may be provided (e.g. bonded, deposited or grown) on a support substrate. In an embodiment, the support substrate may be an insulating substrate (such as an SiO₂ or a sapphire substrate). In an embodiment, the semiconductor layer may comprise a type IV semiconductor and compounds thereof (including but not limited to Si, Ge, SiC) or a type IV semiconductor compound. In another embodiment, the semiconductor layer may comprise graphene or diamond.. In yet an another embodiment, the semiconductor may be a type III-V (binary or tenary) semiconductor including but not limited to GaAs, InSb, InAs, InP, GaSb. In yet another embodiment, the semiconductor may be a type II-VI (binary or tenary) semiconductor, including but not limited to ZnSe, CdSe, CdTe.

Typically, an intrinsic semiconductor layer has a dielectric behaviour at THz frequencies and at room temperature. However, the real component of the permittivity becomes negative, thereby acquiring a metallic character when the carrier density is increased, e.g., for GaAs around 1 THz for carrier densities above 1.5 × 10¹⁶ cm⁻³.

The carrier density may be easily controlled by photo-excitation using e.g. optical pumping with a pulse of moderate fluence (i.e. the radiative flux integrated over time) to excite electrons from the valence to the conduction band of the semiconductor. The high electron mobility at room temperature of certain intrinsic semiconductors such as GaAs (7000 cm²V⁻¹s⁻¹) favours the excitation of SPPs that are localized around the illuminated area. The mobility of the semiconductor material may be high in order to minimize losses. In an embodiment, the mobility may be selected between 500 cm²V⁻¹s⁻¹ and 100, 000 cm²V⁻¹s⁻¹. For example, the intrinsic electron mobility of InSb is 78000 cm²V⁻¹s⁻¹ at room temperature and the intrinsic electron mobility of graphene may be 100,000 cm²V⁻¹s⁻¹ or higher.

In an embodiment, the thickness of the semiconductor layer may be selected to be comparable to the optical absorption length of the semiconductor material. In that case, a (nearly) homogeneous excitation of carriers as a function of the depth in the layer may be achieved. For example when using a pump fluence of 70 µJ/cm², approximately 10¹⁸ cm⁻³ free carriers can be generated on a 0.7 micron thick layer of GaAs on the bright pixels of the illumination pattern are excited whereas the carrier density on the dark pixels is lower than 10¹⁶ cm⁻³. In another embodiment, the thickness of the semiconductor layer may be (much) large than the optical absorption length of the semiconductor material

Hence, from the above it follows that the exposure of a semiconductor layer with a structured laser beam (using e.g. optical pumping), results into a local change of the permittivity in the surface of the semiconducting layer from an insulating (dielectric) state at the non-exposed parts of the semiconductor (corresponding to the dark pixels) to a conducting (metallic) state at the exposed parts of the semiconductor layer (corresponding to the bright pixels). The exposed areas in the semiconductor thin-film layer behave as metallic structures that support the excitation of (localized) SPPs, e.g. THz plasmonic resonant structures and THz plasmonic waveguides. As the SLM is computer-controlled, the shape of the structured laser beam and thus the shape and/dimensions of the exposed area of the semiconductor layer may be controlled. This is schematically shown in **Fig. 1** depicting a top view of the semiconductor layer **116** that is exposed with a structured laser beam. Depending on the shape of the laser beam, different types of THz plasmonic resonant structures **118-122** may be induced in the semiconductor layer.

The photo-induced plasmonic resonant structures may have different structural parameters, including simple rodtype structures **122** and dimer structures comprising two opposing rods or triangles (the well-known bow-tie arrangement) that are separated by a pre-defined spacing. The dimensions (length and/or width) of these structures may range between 10 and 800 micron, preferably between 20 and 600 micron, more preferably between 40 and 400 micron.

Further, the spacing used in the dimer arrangements may be selected to be of a reduced width in order to enhance the local field in the spacing as much as possible. In another embodiment, the spacing may be selected between 100 nm and 50 micron; or between 100 nm and 10 micron; or between 100 nm and 1 micron. The minimum achievable spacing may depend on the optical system and the SLM or mask that is used for projecting the structured optical beam onto the surface of the semiconductor layer.

The photo-excited THz plasmonic resonant structures may be used as THz plasmonic antenna that allow the enhancement of the THz response signal originating from a small volume sample **124-128** that interacts with the resonant structure if it is exposed to a THz probe pulse.

In order to characterize the photo-induced THz antennas in a GaAs layer, the THz extinction spectrum of a random array of rectangular THz plasmonic resonant regions ("rods") with different lengths was measured. Here the extinction, i.e. the sum of scattering and absorption, may be defined according to the optical theorem as one minus the zeroth-order transmittance (which is equal to the ratio of the pumped transmittance and the non-pumped transmittance).

The illuminated area (filling fraction of the rods) may be selected between 50 and 5%, preferably between 40 and 10%. In this particular example, a filling fraction 18% of the surface is used. The spacing between consecutive rods was chosen to be larger than 100 µm along the long axis of the rod and 40 µm along the short axis. The distances between the rods are large enough to minimize the coupling between consecutive elements, while maximizing their filling fraction to increase the extinction. The random distribution of the elements avoids diffraction and any effect due to periodicity in the THz extinction.

The THz extinction measurement measurements have been performed with a modified time-resolved THz time-domain spectrometer system. With this technique an optical pulse is used to pump a semiconductor while a time-delayed THz pulse probes the photo-induced changes in the semiconductor's conductivity. A pulsed laser beam from an amplified oscillator (λ = 800 nm, repetition rate = 1 KHz, pulse duration = 120 fs) is split in three beams. One of the beams is used to generate THz radiation by optical rectification in a ZnTe crystal. The THz pulse is collected by parabolic gold mirrors and weakly focused onto the sample. The beam size onto the sample has a FWHM of 2.5 mm. The transmitted THz radiation is focused onto a second ZnTe crystal. The THz field amplitude in this crystal is probed by the second optical beam, which detects changes in the refractive index of the ZnTe crystal induced by the THz pulse (electro-optical sampling). By controlling the time delay between the optical beam generating the THz pulse and the optical beam probing the THz field amplitude, it is possible to measure the THz amplitude transients, i.e., THz amplitude as a function of the time. These transients can be Fourier transformed to obtain the amplitude or the power spectra. The third optical beam **203** in the setup is used as an optical pump for the sample. Controlling the time delay between the optical pump and the THz pulse probing the sample allows an accurate investigation of carrier dynamics in photo-excited samples.

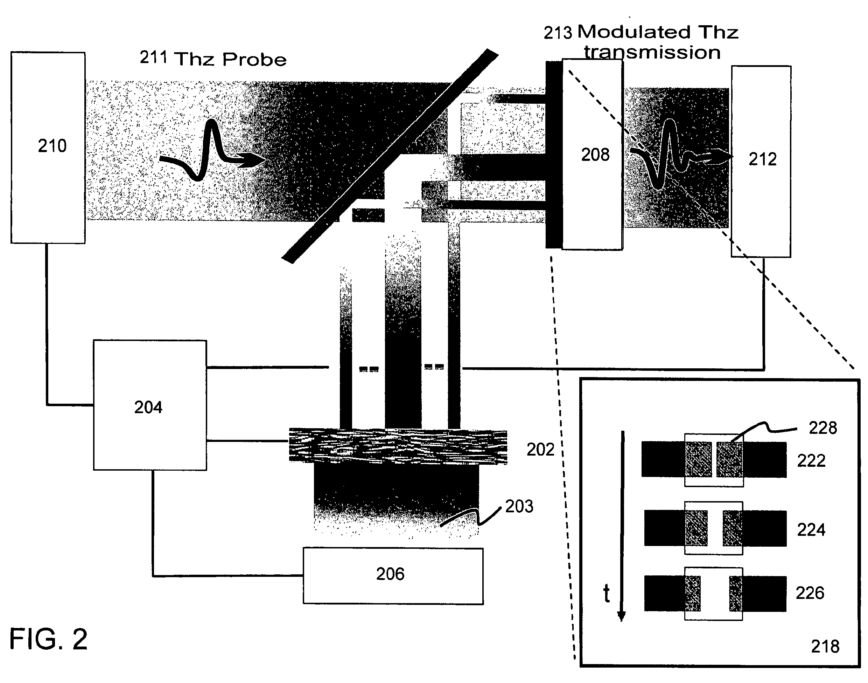

The measurement of the extinction spectrum is schematically depicted in **Fig. 2****.** The sample **208** was first illuminated with a structured pump pulse **203** originating from a SLM **202.** The pulse may have a width of 120 fs and a wave length of λ= 800nm. Subsequently, a THz probe pulse **211** originating from a transmitter **210** was transmitted through the sample. The time delay between the optical pump and the arrival of the THz probe pulse was Δτ_{π-p} = 10 ps. This time delay is sufficiently long to enable the relaxation of hot electrons to the lowest energy state of the conduction band. Furthermore, this time delay was much shorter than the carriers recombination time, which was experimentally determined to be τ_{ρ} ~ 450 ps. The THz transmission amplitude **213** (i.e. the response signal originating from the probed resonating structures) is measured by a detector **212** in a time window of 12 ps, which is longer than the resonance life time. Over this time window the carrier diffusion length is much shorter than all the characteristic lengths in the experiment, i.e., the dimensions of the structures and the THz wavelength. Therefore, the photo-excited plasmonic resonator may be described in a first approximation as having stationary dimensions and carrier density.

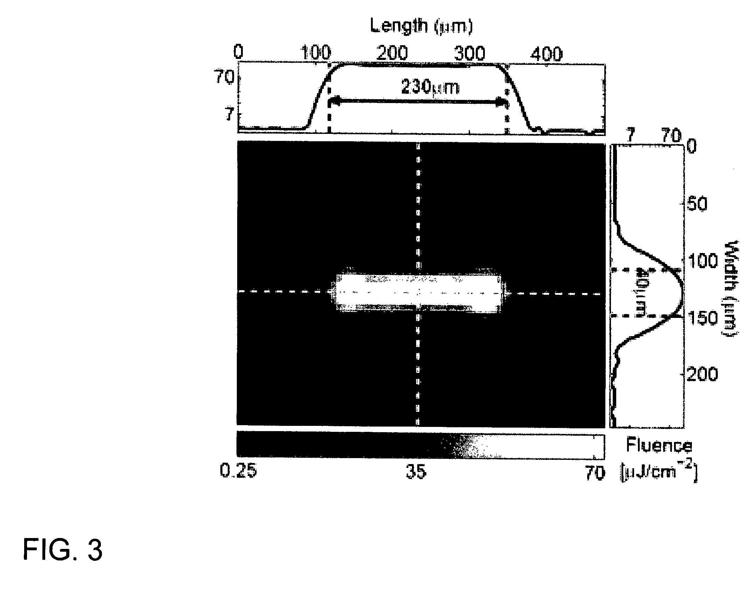

An image of a single THz plasmonic resonator is shown in **Fig. 3****.** This image is taken by placing a beam profiler camera at the position of the sample. The image depicts the formation of a rectangular type THz plasmonic resonant structure of length of around 230 micron and a width of about 40 micron.

Hence, from the above, it follows that system depicted in **Fig. 2** allows the measurement of extinction spectra of photo-exited THz resonant structures, which are covered with a small volume sample (e.g. a thin film material). This way, the THz response of the sample material (e.g. a biological material) may be analyzed. In contrast with the conventional surface plasmon arrays as e.g. described in WO2009/022246, the structural parameters of the resonant structures (shape and/or dimensions) may be varied during subsequent measurements. As shown for example shown in the inset **218** of **Fig. 2** during subsequent measurements **222-226** the spacing between the rods in a dimer arrangement may be varied and/or the length of the rods may be varied. Hence, this system enables THz frequency response measurements as a function of the resonant frequency and/or the local field enhancement of the photo-excited THz plasmonic resonators.

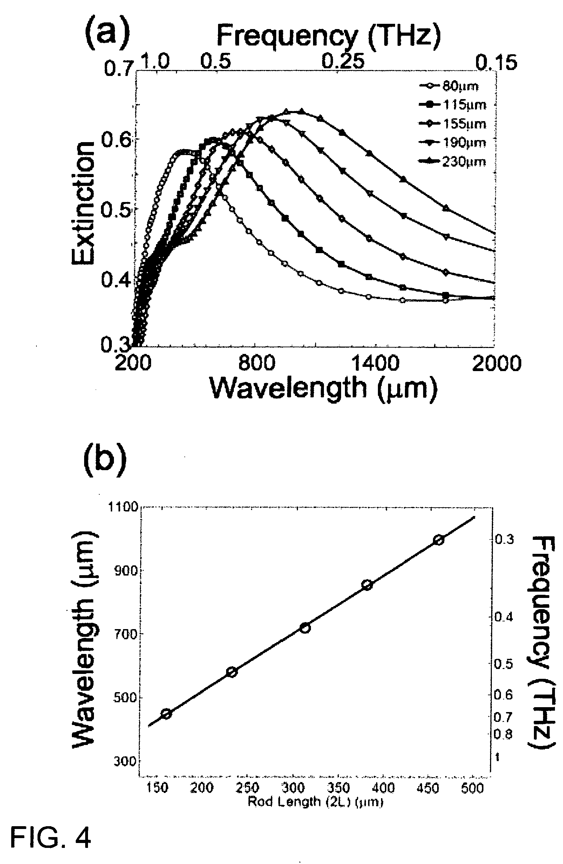

**Fig. 4A** and **4B** show that the extinction spectra of photo-generated plasmonic rods with various lengths and a fixed width of 40 µm pumped at 70 µJ/cm2. The polarization of the THz beam was set parallel to the long axis of the rods. A resonant behavior is the dominant feature of **Fig. 4A**, with a redshift as the length of the photo-generated rods is increased. The maximum extinction reaches values higher than 60%, while the illuminated fraction of the GaAs is only 18%. This may be explained in terms of the resonant response of the photo-excited sample. The resonance frequency, defined as the frequency of maximum extinction, of the different samples is plotted in **Fig. 4B** as a function of the length of the rods. These resonances may be associated to the fundamental plasmonic mode in sub-wavelength rods that occurs when the length of the rod equals half of the surface plasmon polariton wavelength, i.e., L =λ/(2n_{SPP}), where λ is the vacuum wavelength and n_{SPP} the refractive index of the surface plasmon polariton defining its phase velocity. **Fig. 4B** shows that varying the rod length between 150 and 500 micron results in varying the resonant frequency between 1 and 0.3 THz.

From the linear fit shown as a solid line is **Fig. 4B****,** a value of n_{SPP} = 2.12±0.04 was measured. A second resonance in **Fig. 4A** is visible around 300 µm in the extinction spectrum of the longest rods as bump in the extinction spectrum. This resonance may correspond to the next higher order plasmonic mode in a rod that can be excited by normal incident THz radiation, i.e., the 3λ/2n_{SPP} (note that the λ/n_{SPP} resonance is dark, i.e., the symmetric field and charge distributions leads to a vanishing polarizability for a normal incident field). The observation of multipolar photo-generated plasmonic resonances is a consequence of the high quality of the GaAs layer with high mobility charge carriers.

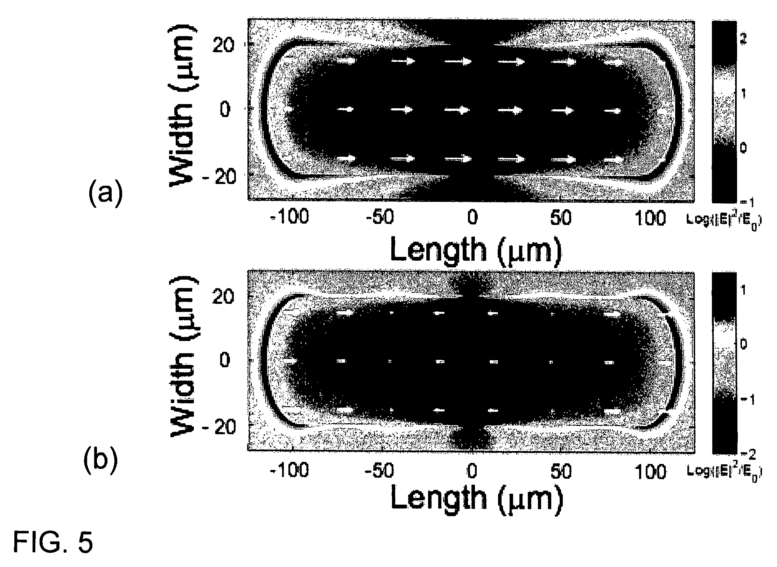

To further investigate the resonances depicted in **Fig. 4A****,** their associated near field (NF) is determined. **Fig. 5A** and **5B** show the NF enhancement in a logarithmic scale calculated at 0.3 and 1 THz, respectively (i.e., at the resonant frequencies of the λ/(2n_{SPP}) and 3λ/(2n_{SPP}) resonances). The near field enhancement is defined as the NF intensity normalized to the incident intensity at the GaAs-air interface. The images show that the resonance at 0.3 THz has a dipolar character as expected for the fundamental λ/(2n_{SPP}) resonance, while the resonance at 1 THz has the multipolar character of the 3λ/(2n_{SPP}) mode. The images further show an almost two order of magnitude enhancement of the near field around the edges (at the ± 100 micron positions).

These large near-field enhancements may be fully controlled in magnitude and spatial position by simply changing the illumination pattern defined with the SLM. This way, the sensitivity of locally functionalized surfaces may be enhanced or spectroscopy of sub-wavelength structures by resonant enhancement of the local fields may be realized. Further improvement in the near field enhancements may be achieved by coupling rods or triangles to form dimers or bowties respectively.

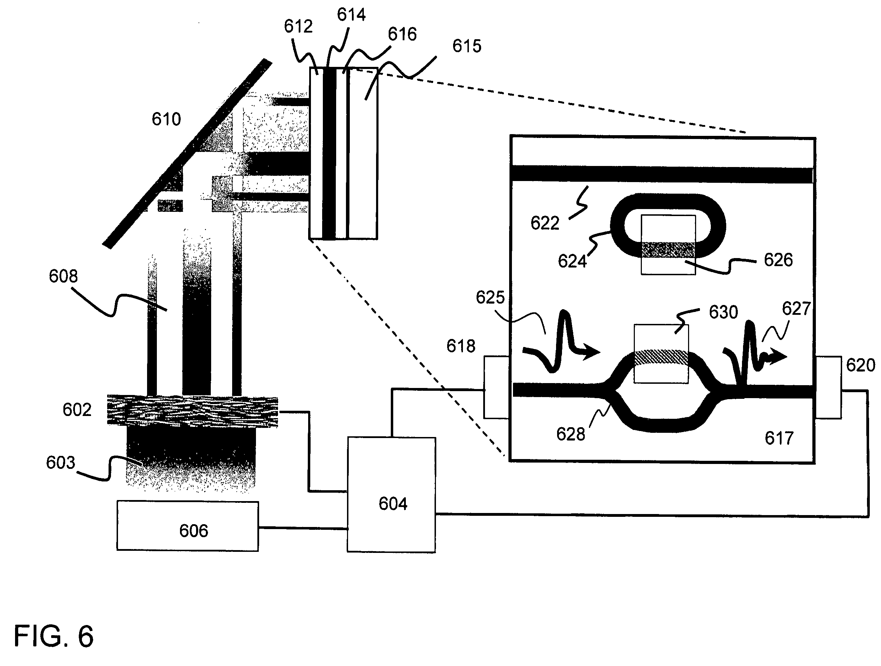

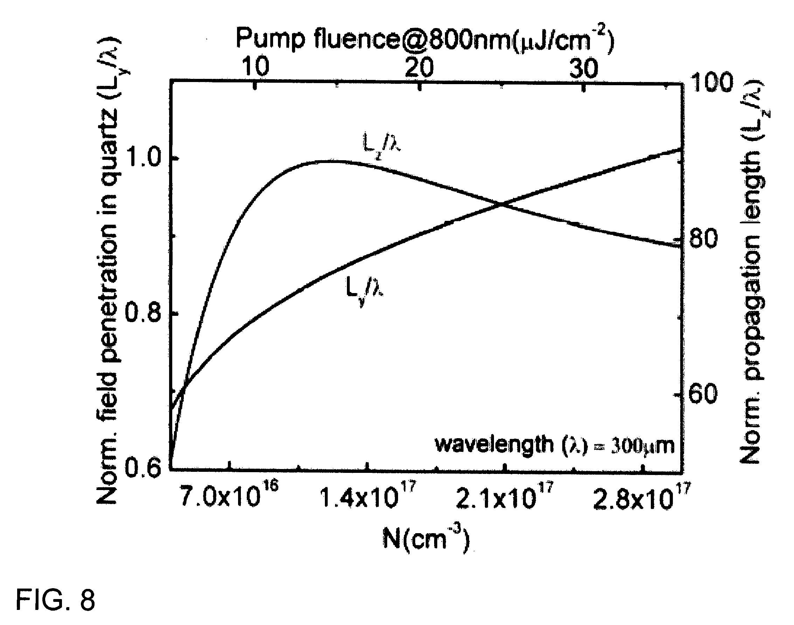

**Fig. 6** depicts at least part of a THz sensing device according to an embodiment of the invention. In this embodiment, the THz sensing devices comprises a computer-controlled SLM **602** or an optical mask, an optical pump source (laser) **606** and a computer **604** connected the optical pump source and the SLM. The SLM is configured to expose a thin-film semiconductor **614** to a structured light beam **608.** In this particular embodiment, the thin-film semiconductor is located between two or more optical (cladding) layers **612,616** so that illumination of semiconductor layer may induce a THz plasmonic waveguide **(****Fig. 6** depicts a cross-section of the semiconductor and cladding layers **612-616**). The thickness of the optical cladding layers may be selected such that it does not hamper the propagation of the SPPs. In an embodiment, the thickness of the optical cladding layer may be selected approximately the field penetration length in the dielectric of the cladding layer (around 300 micron for quartz, see also **Fig. 8** hereunder). In an embodiment, the thickness of the cladding layers may be selected between 50 and 2000 micron. In an another embodiment, the cladding layers may be selected between 100 and 1000 micron or between 200 and 500 micron. In a further embodiment, the THz plasmonic waveguide is symmetric, i.e. the thicknesses of both cladding layers similar. The dielectric/semiconductor/dielectric thin-film stack may be provided on an (insulating) support substrate **615.**

Feature **617** of **Fig. 6** depicts a top view of the surface of the dielectric/semiconductor/ dielectric stack which is exposed to the geometrically structured light. In an embodiment, one or more longitudinal or curved waveguide structures **622,624,628** may be photo-induced in semiconductor layer that is embedded in the cladding material. The intrinsic electron mobility of the semiconductor layer (in this case GaAs) may be selected such that it has a negative real permittivity (metallic behavior) in the THz region. In an embodiment, the thickness of the semiconductor layer may be selected between 50 nm and 20 micron. In another embodiment the thickness may be selected between 100 nm and 10 micron or between 500 nm and 5 micron.

The thickness is selected such that SPPs may be coupled at the opposite sides of the photo-induced semiconducting region thereby giving rise to long and short-range surface plasmon polaritons (LR-SPPs and SR- SPPs) respectively. LR-SPPs may have an enhanced propagation length compared to SPPs on single interfaces due to the reduction of the electromagnetic field in the absorbing thin layer.

The field confinement and the propagation length of LR-SPPs may depend on the permittivity and thickness of semiconductor layer as well as the permittivity of the surrounding dielectric. The permittivity of the semiconductor layer may be expressed as a function of carrier density as given in the Drude-model. Therefore, the control of the carrier density in the semiconductor layer by optical pumping allows the control of the characteristics of LR-SPPs (propagation and confinement).

The photo-induced waveguide in the semiconductor layer may be part of a THz plasmonic device. For example, in an embodiment, the computer-controlled SLM may be configured to expose the semiconductor layer with a structured light beam that is shaped to induce (part of) a THz plasmonic interferometer **628** or (part of) a Thz plasmonic ring resonator **622,624** in the semiconductor layer. Further, a transmitter **618** may couple a THz probe pulse **625** into the THz plasmonic interferometer. A small volume sample **630** may be coupled to one arm of the interferometer. The presence of a small volume sample may cause a phase difference between travelling SPPs in both arms. This phase difference may be detected by a detector **620** by measuring the response **627** to the probe pulse. A similar measurement set-up may be used to measure the response of a small volume sample **630** using the a resonant ring structure **628** wherein the presence of a small volume sample on or over the resonant ring structure will cause a shift in the resonant frequency. The change of the resonant frequency may be detected by a plasmonic sensing line **622** that is in the close vicinity of the ring. In both situations, the response of the small volume sample may be analyzed over a wide range of the THz spectrum by changing the size of the ring resonator or the length of one arm of the interferometer.

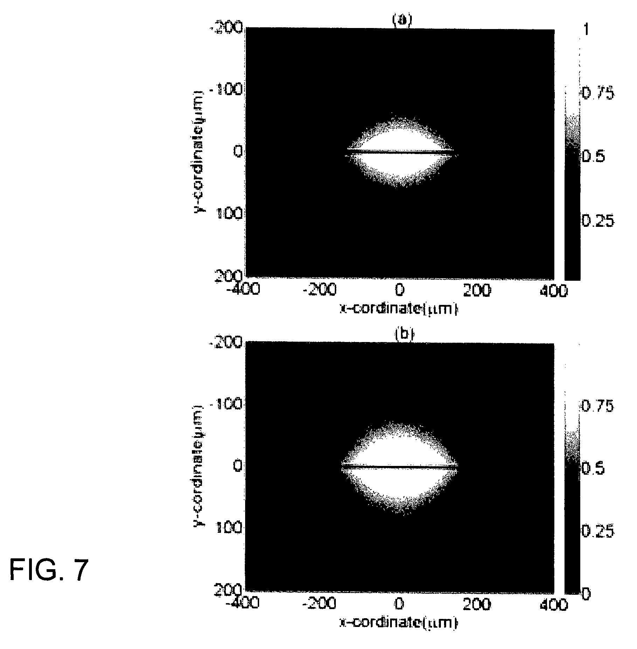

**Fig. 7A** and **7B** illustrates a cross-section of the field intensity at 1 THz associated to a LR-SPP in a GaAs waveguide according to an embodiment of the invention. The waveguide that is induced in the semiconductor layer may have a width of 300 λm and a height of 5 λm. Further, the semiconductor layer positioned between a first optical cladding layer and second optical cladding layer wherein the cladding layers may be of quartz or any other material that may form a thin-film optical waveguide structure. In **Fig. 7A** a photo-induced THz waveguide is shown that has a carrier density N of 3×10¹⁶ cm⁻³. **Fig. 7B** shows a photo-induced THz wave-guide that has a carrier density N of 1×10¹⁷ cm⁻³.

The graph in **Fig. 8** shows the change in propagation length and field confinement of LR-SPPs as a function of the free carrier density in the semiconductor layer that is sandwiched between two optical cladding layers (in this case a GaAs layer embedded in quartz). By changing the carrier concentration (which may be controlled with the pump fluence of the optical pump) the propagation length as well as the decay length in cladding layer may be tuned over a wide range of values. In an embodiment, the optical pump source may be controlled to expose the semiconductor layer between 0 and 500 µJ/cm⁻², preferably between 0 and 250 µJ/cm⁻² for controlling the charge carrier density - and hence the propagation length and/or field penetration - in the semiconductor layer.

Besides scattering and material losses, another important mechanism that determines the optimum performance of the waveguide is the radiation leakage that occurs mainly at the bends of the waveguide. This leakage may also be referred to as bending loss. For a fixed bend radius, the bending loss scales with the decay length in the quartz. Hence, the bending loss may be reduced by using a local low optical fluence to reduce the carrier concentration at bends and increase the field confinement. Such local control of the optical fluence may be easily obtained by controlling the pixels of the SLM that define the bending area.

In order to realize the photo-induced THz plasmonic waveguide the photo-excited carriers must be generated uniformly over the thickness of the GaAs layer. Hence, the pump wavelength has to be selected such that charge carriers are induced over the whole thickness of the semiconducting layer which may be selected from a range between 500 nm and 20 micron. In practice this means that the pump wavelength may be selected between 600 and 900 nm. The selected wavelength may depend on the energy gap and the absorption length of the semiconductor material.

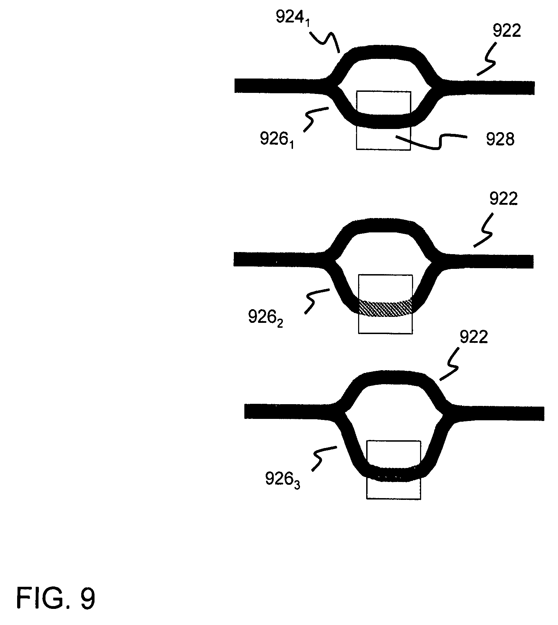

**Fig. 9** schematically depicts a method of measuring the response of a single small volume sample according to an embodiment of the invention. In this particular embodiment, a small volume sample **928** of a predetermined material is coupled to a photo-induced interferometer **922** that comprises two arms **924₁, 926₁.** The response of the interferometer may be measured using a system that is similar to the one in **Fig. 8****.** Once the response of the first interferometer configuration (a) is measured the SLM may change the shaped beam such that the length of one arm of the interferometer **924₂** is increased. Thereafter, the response of this second interferometer configuration is measured. This process may be repeated for further interferometer configurations **924₃** in order measure response of a single small volume sample with high sensitivity.

It is to be understood that any feature described in relation to any one embodiment may be used alone, or in combination with other features described, and may also be used in combination with one or more features of any other of the embodiments, or any combination of any other of the embodiments. One embodiment of the invention may be implemented as a program product for use with a computer system. The program(s) of the program product define functions of the embodiments (including the methods described herein) and can be contained on a variety of computer-readable storage media. Illustrative computer-readable storage media include, but are not limited to: (i) non-writable storage media (e.g., read-only memory devices within a computer such as CD-ROM disks readable by a CD-ROM drive, flash memory, ROM chips or any type of solid-state non-volatile semiconductor memory) on which information is permanently stored; and (ii) writable storage media (e.g., floppy disks within a diskette drive or hard-disk drive or any type of solid-state random-access semiconductor memory) on which alterable information is stored.

## Claims

1. A sensor system comprising,
a support substrate (112) comprising a semiconductor layer (111); and,
an optical system comprising an optical source (106) and a spatial light modulator (102), said optical system being configured for exposing at least part of said semiconductor layer (111) with a geometrically shaped light beam (108), said light beam forming at least one shaped photon-induced THz plasmonic region (118,120,122) in said semiconductor layer, said plasmonic region comprising a sensing region (124,126,128) for sensing the THz response of a small volume sample disposed on or over said support substrate in the vicinity of said plasmonic region.

2. Sensor system according to claim 1 wherein said optical system further comprises:
an optical source controller (104) for controlling the intensity or fluence of the geometrically shaped light beam.

3. Sensor system according to claims 1 or 2, wherein the free carrier density in said plasmonic sensing region is controlled by the intensity or fluence of the geometrically shaped light beam.

4. Sensor system according to any of claims 1-3 wherein said system further comprises:
a THz emitter (210) for exposing said THz plasmonic sensing region to THz radiation; and.
a THz detector (212) for detecting the THz response of said plasmonic sensing region.

5. Sensor system according to any of claims 1-4, wherein at least part of said photo-induced THz plasmonic sensing region (118,120,122) is configured as a THz plasmonic resonating region.

6. Sensor system according to claim 5, wherein said THz plasmonic resonating region (118,120,122) is configured as at least two resonantly coupled plasmonic regions separated by a spacing.

7. Sensor system according to claims 5 or 6, wherein the resonant frequency or the local field enhancement associated with said resonant plasmonic region is controlled by controlling the geometrical shape of said light beam, the position of the said light beam, or the intensity or fluence of said light beam respectively.

8. Sensor system according to any of claims 1-7, wherein said thin-film semiconductor is confined between a first cladding layer and second cladding layer, said photo-induced THz plasmonic region forming part of a THz plasmonic waveguide.

9. Sensor system according to any of claims 1-8 wherein at least part of said plasmonic sensing region is configured as a THz plasmonic waveguide.

10. Sensor system according to claim 9 wherein said plasmonic waveguide is configured as an interferometer (628) or a resonator (622,624), wherein the length of an arms of the interferometer and the resonance frequency of said resonator respectively is controlled by changing the geometrical shape of said light beam.

11. Sensor system according to claims 9 or 10, wherein the propagation length and the field confinement of surface plasmon polaritons in said plasmonic waveguide is controlled by controlling the intensity or fluence of said light beam.

12. Sensor system according to any of claims 9-11, wherein at least part of said plasmonic waveguide is curved and wherein bending losses associated with said curved part of said waveguide are controlled by controlling intensity or fluence of said light beam in said bend parts relative to the other parts of said waveguide.

13. Sensor system according to any of claims 1-12 wherein said semiconductor layer comprises inorganic type IV semiconductor, and compounds thereof; or a type III-V semiconductor, and compounds thereof; or a type II-VI semiconductor, and compounds thereof; and/or, wherein the thickness of said semiconductor layer is selected between 50 nm and 50 micron; and/or wherein intrinsic charge carrier mobility of said semiconductor layer is selected between 500 cm²V⁻¹s⁻¹ and 100, 000 cm²V⁻¹s⁻¹.

14. A method for detecting the THz response of a small volume sample (124,126,128) disposed on or over a semiconductor layer (111):
controlling a spatial light modulator (102) for exposing at least part of said semiconductor layer with a geometrically shaped light beam (108);
controlling the intensity or fluence of the geometrically shaped light beam for inducing a geometrically shaped plasmonic region (118,120,122) in said semiconductor;
transmitting a THz pulse (210) to said plasmonic region; and,
detecting the THz response (212) of said plasmonic region.

15. A computer program product comprising software code portions configured for, when run in the memory of a computer, executing the method steps according to claim 14.

## Patentansprüche

1. Sensorsystem, das aufweist:
ein Trägersubstrat (112) mit einer Halbleiterschicht (111); und
ein optisches System mit einer optischen Quelle (106) und einem räumlichen Lichtmodulator (102), wobei das optische System zum Belichten mindestens eines Teils der Halbleiterschicht (111) mit einem geometrisch geformten Lichtstrahl (108) konfiguriert ist, der Lichtstrahl mindestens einen geformten photoneninduzierten plasmonischen THz-Bereich (118, 120, 122) in der Halbleiterschicht bildet und der plasmonische Bereich einen Erfassungsbereich (124, 126, 128) zum Erfassen der THz-Antwort einer kleinvolumigen Probe aufweist, die auf oder über dem Trägersubstrat in der Umgebung des plasmonischen Bereichs angeordnet ist.

2. Sensorsystem nach Anspruch 1, wobei das optische System ferner aufweist:
eine optische Quellensteuerung (104) zum Steuern der Intensität oder Fluenz des geometrisch geformten Lichtstrahls.

3. Sensorsystem nach Anspruch 1 oder 2, wobei die Dichte freier Ladungsträger im plasmonischen Erfassungsbereich durch die Intensität oder Fluenz des geometrisch geformten Lichtstrahls gesteuert wird.

4. Sensorsystem nach einem der Ansprüche 1 bis 3, wobei das System ferner aufweist:
einen THz-Strahler (210) zum Belichten von THz-Strahlung auf den plasmonischen THz-Erfassungsbereich; und
einen THz-Detektor (212) zum Detektieren der THz-Antwort des plasmonischen Erfassungsbereichs.

5. Sensorsystem nach einem der Ansprüche 1 bis 4, wobei mindestens ein Teil des photoinduzierten plasmonischen THz-Erfassungsbereichs (118, 120, 122) als plasmonischer THz-Resonanzbereich konfiguriert ist.

6. Sensorsystem nach Anspruch 5, wobei der plasmonische THz-Resonanzbereich (118, 120, 122) als mindestens zwei resonant gekoppelte plasmonische Bereiche konfiguriert ist, die durch einen Abstand getrennt sind.

7. Sensorsystem nach Anspruch 5 oder 6, wobei die Resonanzfrequenz oder die lokale Feldverstärkung, die dem plasmonischen Resonanzbereich zugeordnet ist, durch Steuern der geometrischen Form des Lichtstrahls, der Position des Lichtstrahls bzw. der Intensität oder Fluenz des Lichtstrahls gesteuert wird.

8. Sensorsystem nach einem der Ansprüche 1 bis 7, wobei der Dünnschichthalbleiter zwischen einer ersten Mantelschicht und einer zweiten Mantelschicht eingeschlossen ist, wobei der photoinduzierte plasmonische THz-Bereich Teil eines plasmonischen THz-Wellenleiters bildet.

9. Sensorsystem nach einem der Ansprüche 1 bis 8, wobei mindestens ein Teil des plasmonischen Erfassungsbereichs als plasmonischer THz-Wellenleiter konfiguriert ist.

10. Sensorsystem nach Anspruch 9, wobei der plasmonische Wellenleiter als Interferometer (628) oder als Resonator (622, 624) konfiguriert ist, wobei die Länge eines Arms des Interferometers bzw. die Resonanzfrequenz des Resonators durch Ändern der geometrischen Form des Lichtstrahls gesteuert wird.

11. Sensorsystem nach Anspruch 9 oder 10, wobei die Ausbreitungslänge und die Feldlokalisation von Oberflächenplasmonpolaritonen im plasmonischen Wellenleiter durch Steuern der Intensität oder Fluenz des Lichtstrahls gesteuert wird.

12. Sensorsystem nach einem der Ansprüche 9 bis 11, wobei mindestens ein Teil des plasmonischen Wellenleiters gekrümmt ist und wobei Biegeverluste, die dem gekrümmten Teil des Wellenleiters zugeordnet sind, durch Steuern der Intensität oder Fluenz des Lichtstrahls in den Biegeteilen relativ zu den anderen Teilen des Wellenleiters gesteuert werden.

13. Sensorsystem nach einem der Ansprüche 1 bis 12, wobei die Halbleiterschicht anorganischen Typ-IV-Halbleiter und Verbindungen davon; oder einen Typ-III-V-Halbleiter und Verbindungen davon; oder einen Typ II-VI-Halbleiter und Verbindungen davon aufweist; und/oder wobei die Dicke der Halbleiterschicht zwischen 50 nm und 50 Mikrometern ausgewählt ist; und/oder wobei die intrinsische Ladungsträgermobilität der Halbleiterschicht zwischen 500 cm²V⁻¹s⁻¹ und 100.000 cm²V⁻¹s⁻¹ ausgewählt ist.

14. Verfahren zum Detektieren der THz-Antwort einer kleinvolumigen Probe (124, 126, 128), die auf oder über einer Halbleiterschicht (111) angeordnet ist:
Steuern eines räumlichen Lichtmodulators (102) zum Belichten mindestens eines Teils der Halbleiterschicht mit einem geometrisch geformten Lichtstrahl (108);
Steuern der Intensität oder Fluenz des geometrisch geformten Lichtstrahls zum Induzieren eines geometrisch geformten plasmonischen Bereichs (118, 120, 122) im Halbleiter;
Senden eines THz-Impulses (210) zum plasmonischen Bereich; und
Detektieren der THz-Antwort (212) des plasmonischen Bereichs.

15. Computerprogrammprodukt mit Softwarecodeabschnitten, die konfiguriert sind, bei Durchlauf im Speicher eines Computers die Verfahrensschritte nach Anspruch 14 abzuarbeiten.

## Revendications

1. Système de détection comprenant,
un substrat de support (112) comprenant une couche semi-conductrice (111) ; et
un système optique comprenant une source optique (106) et un modulateur de lumière spatial (102), ledit système optique étant configuré pour exposer au moins une partie de ladite couche semi-conductrice (111) à un faisceau de lumière de forme géométrique (108), ledit faisceau de lumière formant au moins une région plasmonique dans les THz induite par photons formée (118, 120, 122) dans ladite couche semi-conductrice, ladite région plasmonique comprenant une région de détection (124, 126, 128) pour détecter la réponse dans les THz d'un échantillon de petit volume disposé sur ledit substrat de support ou au-dessus de celui-ci dans le voisinage de ladite région plasmonique.

2. Système de détection selon la revendication 1, dans lequel ledit système optique comprend en outre :
un contrôleur de source optique (104) pour commander l'intensité ou la fluence du faisceau de lumière de forme géométrique.

3. Système de détection selon la revendication 1 ou 2, dans lequel la densité de porteurs libres dans ladite région de détection plasmonique est commandée par l'intensité ou la fluence du faisceau de lumière de forme géométrique.

4. Système de détection selon l'une quelconque des revendications 1 à 3, dans lequel ledit système comprend en outre :
un émetteur dans les THz (210) pour exposer ladite région de détection plasmonique dans les THz à un rayonnement dans les THz ; et
un détecteur dans les THz (212) pour détecter la réponse dans les THz de ladite région de détection plasmonique.

5. Système de détection selon l'une quelconque des revendications 1 à 4, dans lequel au moins une partie de ladite région de détection plasmonique dans les THz photo-induite (118, 120, 122) est configurée en tant que région résonante plasmonique dans les THz.

6. Système de détection selon la revendication 5, dans lequel ladite région résonante plasmonique dans les THz (118, 120, 122) est configurée en tant qu'au moins deux régions plasmoniques couplées de manière résonante séparées par un espacement.

7. Système de détection selon la revendication 5 ou 6, dans lequel la fréquence de résonance ou l'amélioration du champ local associé à ladite région plasmonique résonante est commandée en commandant la forme géométrique dudit faisceau de lumière, la position dudit faisceau de lumière, ou l'intensité ou la fluence dudit faisceau de lumière, respectivement.

8. Système de détection selon l'une quelconque des revendications 1 à 7, dans lequel ledit semi-conducteur à films minces est confiné entre une première couche de gainage et une deuxième couche de gainage, ladite région plasmonique dans les THz photo-induite constituant une partie d'un guide d'ondes plasmonique dans les THz.

9. Système de détection selon l'une quelconque des revendications 1 à 8, dans lequel au moins une partie de ladite région de détection plasmonique est configurée en tant que guide d'ondes plasmonique dans les THz.

10. Système de détection selon la revendication 9, dans lequel ledit guide d'ondes plasmonique est configuré en tant qu'interféromètre (628) ou résonateur (622, 624), dans lequel la longueur d'une branche de l'interféromètre et la fréquence de résonance dudit résonateur sont respectivement commandées en modifiant la forme géométrique dudit faisceau de lumière.

11. Système de détection selon la revendication 9 ou 10, dans lequel la longueur de propagation et le confinement de champ de plasmon polaritons de surface dans ledit guide d'ondes plasmonique sont commandés en commandant l'intensité ou la fluence dudit faisceau de lumière.

12. Système de détection selon l'une quelconque des revendications 9 à 11, dans lequel au moins une partie dudit guide d'ondes plasmonique est incurvée, et dans lequel les pertes de courbure associées à ladite partie incurvée dudit guide d'ondes sont commandées en commandant l'intensité ou la fluence dudit faisceau de lumière dans lesdites parties de coude par rapport aux autres parties dudit guide d'ondes.

13. Système de détection selon l'une quelconque des revendications 1 à 12, dans lequel ladite couche semi-conductrice comprend un semi-conducteur de type IV inorganique, et des composés de celui-ci ; ou un semi-conducteur de type III-V, et des composés de celui-ci ; ou un semi-conducteur de type II-VI, et des composés de celui-ci ; et/ou dans lequel l'épaisseur de ladite couche semi-conductrice est sélectionnée entre 50 nm et 50 µm ; et/ou dans lequel la mobilité des porteurs de charge intrinsèque de ladite couche semi-conductrice est sélectionnée entre 500 cm²V⁻¹s⁻¹ et 100.000 cm²V⁻¹s⁻¹.

14. Procédé pour détecter la réponse dans les THz d'un échantillon de petit volume (124, 126, 128) disposé sur ou au-dessus d'une couche semi-conductrice (111) ;
commander un modulateur de lumière spatial (102) pour exposer au moins une partie de ladite couche semi-conductrice à un faisceau de lumière de forme géométrique (108) ;
commander l'intensité ou la fluence du faisceau de lumière de forme géométrique pour induire une région plasmonique de forme géométrique (118, 120, 122) dans ledit semi-conducteur ;
transmettre une impulsion dans les THz (210) à ladite région plasmonique ; et
détecter la réponse dans les THz (212) de ladite région plasmonique.

15. Produit-programme d'ordinateur comprenant des parties de code logiciel configuré pour, lorsqu'il est exécuté dans la mémoire d'un ordinateur, exécuter les étapes de procédé selon la revendication 14.
